(19) **Europäisches Patentamt**
**European Patent Office**
**Office européen des brevets**

(11) **EP 1 402 205 B1**

(12) **EUROPÄISCHE PATENTSCHRIFT**

(45) Veröffentlichungstag und Bekanntmachung des Hinweises auf die Patenterteilung:
**07.01.2009 Patentblatt 2009/02**

(21) Anmeldenummer: **02740384.9**

(22) Anmeldetag: **28.05.2002**

(51) Int Cl.:
***F16H 61/00*** *(2006.01)*

(86) Internationale Anmeldenummer:
**PCT/DE2002/001954**

(87) Internationale Veröffentlichungsnummer:
**WO 2003/001087 (03.01.2003 Gazette 2003/01)**

(54) **VERFAHREN UND SYSTEM ZUR SCHLUPFERKENNUNG EINES UMSCHLINGUNGSTEILS EINES UMSCHLINGUNGSGETRIEBES**

METHOD AND SYSTEM FOR IDENTIFYING THE DEGREE OF SLIP OF A BELT PART OF A BELT TRANSMISSION

PROCEDE ET SYSTEME POUR IDENTIFIER LE GLISSEMENT D'UNE PIECE D'ENROULEMENT D'UNE TRANSMISSION A VARIATION CONTINUE

(84) Benannte Vertragsstaaten:
**DE FR**

(30) Priorität: **22.06.2001 DE 10130231**

(43) Veröffentlichungstag der Anmeldung:
**31.03.2004 Patentblatt 2004/14**

(73) Patentinhaber: **ROBERT BOSCH GMBH**
**70442 Stuttgart (DE)**

(72) Erfinder:
• **RIES-MÜLLER, Klaus**
**74906 Bad Rappenau (DE)**
• **LUH, Joachim**
**74321 Bietigheim-Bissigen (DE)**

(56) Entgegenhaltungen:
**US-A- 6 099 424     US-A- 6 146 294**
**US-A1- 2001 049 315**

**Beschreibung**

Beschreibung für folgende(n) Vertragsstaat(en) : FR

Die vorliegende Erfindung betrifft ein Verfahren zum Erkennen eines Schlupfes eines Umschlingungsteils eines eine Getriebedrehzahlübersetzung aufweisenden Umschlingungsgetriebes, insbesondere eines CVT-Getriebes.
Die Erfindung betrifft weiterhin ein System zum Erkennen eines Schlupfes eines Umschlingungsteils eines eine Getriebedrehzahlübersetzung aufweisenden Umschlingungsgetriebes, insbesondere eines CVT-Getriebes.

**Stand der Technik**

Bei Umschlingungsgetrieben ist es problematisch, wenn das Umschlingungsteil, das Momente zwischen zwei rotierenden Elementen überträgt, einen Schlupf aufweist, das heißt durchdreht beziehungsweise durchrutscht. In diesem Fall kann es zu starken Schädigungen des Umschlingungsgetriebes kommen, insbesondere zu einem erhöhten Verschleiß des Umschlingungsteils. Mitunter kann das Getriebe zerstört werden, wenn ein zu starker Schlupf des Umschlingungsteils auftritt.
Die vorstehende Problematik ist insbesondere bei CVT-Getrieben relevant. CVT-Getriebe sind stufenlos arbeitende Getriebe (CVT = "Continously Variable Transmission"). Sie umfassen im Wesentlichen zwei Kegelradpaare und ein beispielsweise als Schubgliederband ausgelegtes Umschlingungsteil. Dabei ist eines der Kegelradpaare mit einem Antrieb verbunden, beispielsweise einem Verbrennungsmotor, während das andere Kegelradpaar mit einem Abtrieb verbunden ist. Zur Einstellung der Übersetzung des CVT-Getriebes und der Spannung des Umschlingungsteils bestehen das Antriebskegelradpaar und das Abtriebskegelradpaar im Allgemeinen aus je einem axial feststehenden und einem axial beweglichen Kegelrad. Das Antriebskegelradpaar wird auch als Antriebsscheibe oder Primärscheibe bezeichnet; das Abtriebskegelradpaar wird auch als Abtriebsscheibe oder Sekundärscheibe bezeichnet. Die Anpressung der axial beweglichen Kegelräder gegen das Umschlingungsteil erfolgt im Allgemeinen durch Aufbau eines hydraulischen Drucks, beispielsweise durch eine Pumpe. Durch eine geeignete Wahl der Anpressdrücke kann die gewünschte Übersetzung des CVT-Getiebes und die erforderliche Spannung des Umschlingungsteils eingestellt werden. Die Pumpe für den hydraulischen Antrieb der Kegel'räder kann beispielsweise durch den Verbrennungsmotor angetrieben werden. Für die Kraftübertragung vom Verbrennungsmotor zum Antriebskegelradpaar kann beispielsweise ein Drehmomentenwandler und ein Planetensatz mit Kupplungen für Vorwärts- und Rückwärtsfahrt vorhanden sein. Durch eine Erhöhung des Anpressdruckes kann zwar ein Schlupfen des Umschlingungsteils in der Regel vermieden werden, ein erhöhter Anpressdruck führt jedoch zu einer unerwünschten Erhöhung der Verluste, beispielsweise der Pumpenverluste. Die Regelung beziehungsweise Steuerung des Anpressdruckes muss deshalb ein Optimum zwischen minimalen Druckverlusten einerseits und dem zu vermeidenden Schlupf andererseits finden. In diesem Zusammenhang ist es bereits bekannt, eine Druckreserve aufzubauen, um einen Schlupf des Umschlingungsteils zu vermeiden, der beispielsweise durch die Dynamik und Störeinkopplungen verursacht werden könnte, die von den Fahrbahneigenschaften abhängig sind.
Das Dokument US 6099 424 offenbart ein Verfahren nach dem Oberbegriff des Anspruchs 1.
Um ein unerwünschtes Auftreten eines Schlupfes des Umschlingungsteils vermeiden zu können, ist es in jedem Fall erforderlich, einen entsprechenden Schlupf rechtzeitig zu erkennen.

Vorteile der Erfindung

Das erfindungsgemäße Verfahren zum Erkennen eines Schlupfes des Umschlingungsteils baut auf dem Stand der Technik dadurch auf, dass ein Schlupf des Umschlingungsteils über die Beurteilung der Änderung der Getriebedrehzahlübersetzung erkannt wird, wobei die Beurterlung der Getriebedrehzahlübetzung die Unterscheidung zwischen relativ langsamen Änderungender der Getriebedrehzahlübersetzung und relativ schnellen Änderungen der Getriebedrehzahlübersetzung umfasst. Die Getriebedrehzahlübersetzung kann dabei über einen Quotienten aus der Primärdrehzahl, beispielsweise eines Antriebskegelradpaares, und einer Sekundärdrehzahl, beispielsweise der Drehzahl eines Abtriebskegelradpaares, bestimmt werden. Die Primärdrehzahl und die Sekundärdrehzahl werden bei Umschlingungsgetrieben ohnehin standardmäßig erfasst, so dass diesbezüglich kein zusätzlicher Hardwareaufwand erforderlich ist. Durch die erfindungsgemäße Lösung können beispielsweise bereits beim ersten Erkennen eines Schlupfes Gegenmaßnahmen eingeleitet werden, bevor es zu einer Zerstörung des Umschlingungsteils, beispielsweise eines Schubgliederbandes, oder zu einem erhöhten Verschleiß kommt.
Dadurch dass die Beurteilung der Getriebedrehzahlübersetzung die Unterscheidung zwischen relativ langsamen Änderungen der Getriebedrehzahlübersetzung und relativ schnellen Änderungen der Getriebedrehzahlübersetzung umfasst, kann zwischen üblichen Übersetzungsänderungen, beispielsweise aufgrund einer gewollten Übersetzungsverstellung, und Übersetzungsänderungen unterschieden werden, die auf ein schlupfendes Umschlingungsteil zurückzuführen sind. Übersetzungsänderungen aufgrund eines Schlupfes führen zu erheblich schnelleren Übersetzungsänderungen als Übersetzungsänderungen aufgrund beispielsweise einer Verstellung der Kegelscheiben. Aufgrund dieses Zusammenhanges ist es vorteilhaft, nur relativ schnelle Änderungen der Getriebedrehzahlübersetzung zur Bestimmung des Schlupfes heranzuziehen.

Bei vorteilhaften Weiterbildungen des erfindungsgemäßen Verfahrens ist weiterhin vorgesehen, dass bei der Erekennung eines Schlupfes Gegenmaßnahmen eingeleitet werden.

In diesem Zusammenhang kann bei dem erfindungsgemäßen Verfahren beispielsweise vorgesehen sein, dass das Umschlingungsteil mit einem einstellbaren Anpressdruck um zwei Kegelradpaare umläuft (wie dies eingangs im Zusammenhang mit CVT-Getrieben bereits erläutert wurde) und dass die Gegenmaßnahmen eine Erhöhung des Anpressdruckes umfassen. Eine derartige Erhöhung des Anpressdruckes wird vorzugsweise nur für kurze Zeitabschnitte vorgesehen beziehungsweise fortlaufend auf ihre anhaltende Notwendigkeit überprüft, um die eingangs bereits erwähnten Verluste so gering wie möglich zu halten.

Das erfindungsgemäße Verfahren kann Ausführungsformen umfassen, bei denen vorgesehen ist, dass über den erkannten Schlupf auf den Verschleißzustand des Umschlingungsteils geschlossen wird. Der erfasste Schlupf kann dabei beispielsweise in die Abschätzung der Alterung beziehungsweise des Verschleißes des Schubgliederbandes eingehen, wie sie in der Offenlegungsschrift DE 100 28 459 A1 erläutert ist. Gemäß der Lehre dieser Druckschrift wird beispielsweise ein Alterungswert des Schubgliederbandes bestimmt, der unter anderem von der Betriebszeitdauer des Schubgliederbandes abhängt. Weitere Größen, die den Alterungswert beeinflussen, sind beispielsweise das Fahrverhalten und die Betriebsbedingungen, unter denen das Schubgliederband betrieben worden ist. In Abhängigkeit eines derartigen Alterungswertes ist es beispielsweise möglich, eine Sicherheitsreserve für die Spannung beziehungsweise den Anpressdruck des Schubgliederbandes zu bestimmen.

Insbesondere in dem vorliegend erläuterten Zusammenhang kann bei dem erfindungsgemäßen Verfahren vorgesehen sein, dass das Umschlingungsteil mit einem einstellbaren Anpressdruck um Kegelradpaare umläuft, und dass der Anpressdruck in Abhängigkeit vom Verschleißzustand des Umschlingungsteils eingestellt wird. Auch in diesem Fall wird der Anpressdruck jedoch vorzugsweise nur maßvoll erhöht, um die Verluste des Getriebes nicht unnötig zu erhöhen.

Bei einer bevorzugten Ausführungsform des erfindungsgemäßen Verfahrens ist vorgesehen, dass der Schlupf wie folgt definiert wird:

$$s = 1 - (ig/ji),$$

wobei s den Schlupf, ig eine geometrische Getriebeübersetzung und ji die Getriebedrehzahlübersetzung bezeichnet. Die geometrische Getriebeübersetzung kann bei einem CVT-Getriebe durch eine Verstellung der Kegelscheiben eingestellt werden. Die Erfassung der geometrischen Übersetzung kann beispielsweise mit einem Wegsensor beziehungsweise durch eine Abstandsmessung erfolgen.

Insbesondere in diesem Zusammenhang kann bei bevorzugten Ausführungsformen des erfindungsgemäßen Verfahrens vorgesehen sein, dass die geometrische Getriebeübersetzung als ein konstanter Wert angenommen wird. Diese Annahme gilt näherungsweise für einen kleinen Zeitbereich beziehungsweise für eine kleine Zeitdauer. Wenn der Schlupf durch die vorstehend erläuterte. Formel bestimmt wird, hängt dieser bei einer konstanten geometrischen Übersetzung ausschließlich von der Getriebedrehzahlübersetzung ab. Anders ausgedrückt, ist eine Änderung des Schlupfes in diesem Fall proportional zu einer Änderung der Getriebedrehzahlübersetzung.

Bei dem erfindungsgemäßen Verfahren kann weiterhin vorgesehen sein, dass die geometrische Getriebeübersetzung auf den maximalen Wert der geometrischen Getriebeübersetzung gesetzt wird, wenn der Zustand "maximale Getriebeübersetzung" erkannt wird. Bei dieser Ausführungsform der Erfindung wird zur Bestimmung der geometrischen Getriebeübersetzung der Umstand herangezogen, dass in den Endlagen der Kegelscheiben die geometrische Übersetzung im Allgemeinen bekannt' ist. Das heißt, bei minimaler und maximaler Getriebeübersetzung ist die geometrische Übersetzung aufgrund von konstruktiven Vorgaben bekannt. Die Erkennung der maximalen Übersetzung kann beispielsweise von dem erfindungsgemäßen System anhand der Übersetzungsregelung erfolgen.

Aus dem Vorstehenden ergibt sich, dass das erfindungsgemäße Verfahren ebenfalls vorsehen kann, dass die geometrische Getriebeübersetzung auf den minimalen Wert der geometrischen Getriebeübersetzung gesetzt wird, wenn der Zustand "minimale Getriebeübersetzung" erkannt wird.

Insbesondere in diesem Zusammenhang kann das erfindungsgemäße Verfahren weiterhin vorsehen, dass die Schlupferkennung im Wesentlichen nur im Zustand "maximale Getriebeübersetzung" erfolgt.

In ähnlicher Weise kann das erfindungsgemäße Verfahren zusätzlich oder alternativ vorsehen, dass die Schlupferkennung im Wesentlichen nur im Zustand "minimale Getriebeübersetzung" erfolgt.

Insbesondere wenn die geometrische Getriebeübersetzung als ein konstanter Wert angenommen wird, ist bei dem erfindungsgemäßen Verfahren vorzugsweise weiterhin vorgesehen, dass eine Schlupfänderung wie folgt bestimmt

wird:

$$ds(n) = ([ji(n+1) - ji(n)] - K) / N,$$

wobei ds die Schlupfänderung, n einen Index beziehungsweise ein Rechenraster, ji die Getriebedrehzahlübersetzung, K einen Kompensationsterm und N einen Normierungsterm bezeichnet. Zur Erkennung eines Schlupfes kann die Schlupfänderung in vorteilhafter Weise mit einem Schwellenwert verglichen werden: Dieser Schwellenwert wird vorzugsweise betriebspunktabhängig appliziert, wobei beispielsweise die Last, das Motormoment, die Motordrehzahl und die Übersetzung berücksichtigt werden können.

Bei vorteilhaften Weiterbildungen des erfindungsgemäßen Verfahrens ist in diesem Zusammenhang weiterhin vorgesehen, dass der Kompensationsterm zur Kompensation von relativ langsamen Änderungen der Getriebedrehzahlübersetzung vorgesehen ist. Die relativ langsamen Änderungen der Getriebedrehzahlübersetzung sind in der Regel durch gewollte Verstellungen der Übersetzung begründet und daher für eine Erkennung des Schlupfes von untergeordneter Bedeutung.

In diesem Zusammenhang kann bei dem erfindungemäßen Verfahren weiterhin vorgesehen sein, dass der Kompensationsterm über eine Medianwertbildung bestimmt wird. Bei der Bildung eines Medianwertes erfolgt, im Gegensatz zur Bildung eines arithmetischen Mittelwertes, kein Summieren mehrerer Werte und ein Dividieren durch die Anzahl der Werte, sondern die Werte werden der Größe nach geordnet und der bezogen auf diese Ordnung mittlere Wert stellt den Medianwert dar. Es hat sich gezeigt, dass eine Medianwertbildung ausgezeichnet dazu geeignet ist, Effekte von Beschleunigungen und Verzögerungen für eine größere Klasse als der linearen praktisch vollständig zu kompensieren.

Zusätzlich oder alternativ kann beim erfindungsgemäßen Verfahren vorgesehen sein, dass der Kompensationsterm über eine Mittelwertbildung bestimmt wird. Bei einer derartigen Mittelwertbildung kann es sich beispielsweise um die Bildung eines arithmetischen Mittelwertes handeln.

Insbesondere im vorstehend erläuterten Zusammenhang kann bei dem erfindungsgemäßen Verfahren beispielsweise vorgesehen sein, dass der Kompensationsterm wie folgt bestimmt wird:

$$K = [ji(n+4) - ji(n-4)] / 8,$$

wobei K den Kompensationsterm, ji die Getriebedrehzahlübersetzung und n einen Index beziehungsweise ein Rechenraster bezeichnet. Selbstverständlich sind auch Ausführungsformen denkbar, bei denen eine andere Anzahl als 8 Rechenraster berücksichtigt werden.

Bei dem erfindungsgemäßen Verfahren kann weiterhin vorgesehen sein, dass der Normierungsterm zur Anpassung der Schlupfänderung an verschiedene Drehzahlbereiche vorgesehen ist.

Insbesondere in diesem Zusammenhang kann bei dem erfindungsgemäßen Verfahren beispielsweise vorgesehen sein, dass der Normierungsterm wie folgt bestimmt wird:

$$N = [ji(n)]^3,$$

wobei N den Normierungsterm, ji die Getriebedrehzahlübersetzung und n einen Index beziehungsweise ein Rechenraster bezeichnet.

## Zeichnungen

Die Erfindung wird nachfolgend anhand der zugehörigen Zeichnungen noch näher erläutert.

Es zeigen:

Figur 1     ein Flussdiagramm, das die Durchführung einer Ausführungsform des erfindungsgemäßen Verfahrens veranschaulicht,

Figur 2    eine schematische Darstellung, die das Zusammenwirken eines Systems mit einem CVT-Getriebe veranschaulicht,

Figur 3    den Schlupf in Abhängigkeit vom Motormoment bei einer ersten geometrischen Getriebeübersetzung und einem Hydraulikanpressdruck von 10 bar, 12 bar, 16 bar und 20 bar,

Figur 4    den Schlupf in Abhängigkeit vom Motormoment bei einer zweiten geometrischen Getriebeübersetzung und einem Hydraulikanpressdruck von 9 bar, 12 bar, 16 bar, 20 bar und 24 bar,

Figur 5    den Schlupf in Abhängigkeit vom Motormoment bei einer dritten geometrischen Getriebeübersetzung und einem Hydraulikanpressdruck von 8 bar, 12 bar, 16 bar, 20 bar und 24 bar, und

Figur 6    ein Beispiel für den zeitlichen Verlauf des Schlupfes und der Schlupfänderung beim abrupten Schließen der Vorwärtskupplung eines CVT-Getriebes.

**Beschreibung der Ausführungsbeispiele**

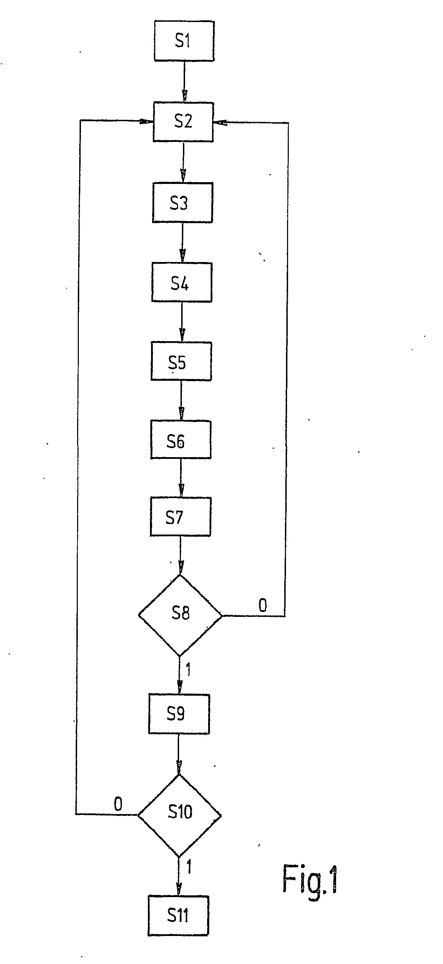

Figur 1 zeigt ein Flussdiagramm, das die Durchführung einer Ausführungsform des erfindungsgemäßen Verfahrens veranschaulicht. Dabei ergibt sich die Bedeutung der in Figur 1 dargestellten Schritte S1 bis S11 aus der folgenden Tabelle.

| Schritt | Bedeutung |
|---|---|
| S1 | Start |
| S2 | Erfasse Primärdrehzahl npm |
| S3 | Erfasse Sekundärdrehzahl nse |
| S4 | Berechne Getriebedrehzahlübersetzung ji |
| S5 | Bestimme Kompensationsterm K |
| S6 | Bestimme Normierungsterm N |
| S7 | Bestimme Schlupfänderung ds(n) |
| S8 | Schlupfänderung ds (n) $\geq$ Schwellenwert SW? |
| S9 | Leite Gegenmaßnahmen ein |
| S10 | Ende? |
| S11 | Ende |

Die in Figur 1 dargestellte Ausführungsform des erfindungsgemäßen Verfahrens beginnt beim Schritt S1.

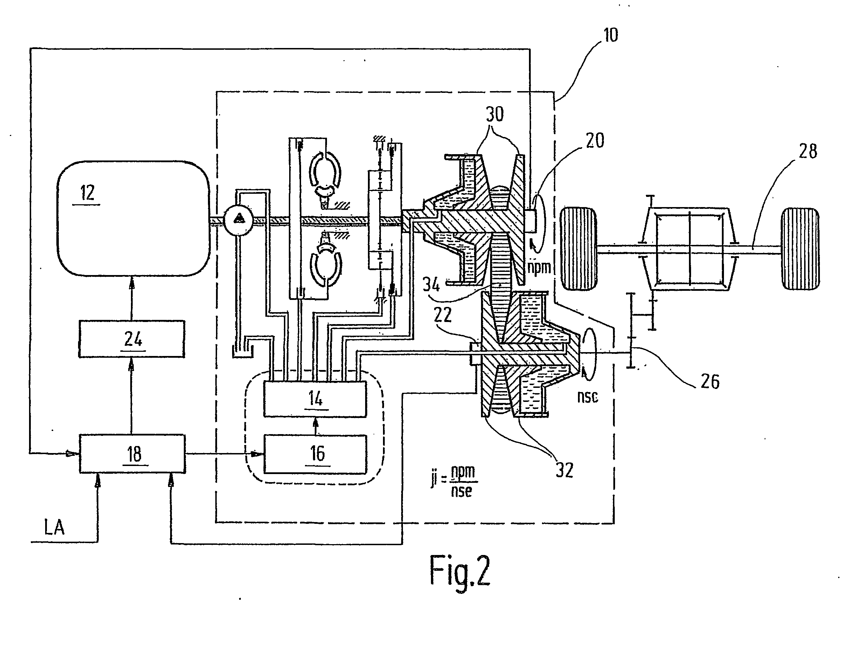

Beim Schritt S2 wird die Primärdrehzahl npm erfasst. Zu diesem Zweck kann beispielsweise der in Figur 2 mit 20 bezeichnete Drehzahlsensor eingesetzt werden, der ein Signal für die Drehzahl eines Antriebs- beziehungsweise Primärkegelradpaares 30 liefert.

Beim Schritt S3 wird die Sekundärdrehzahl nse erfasst. Hierzu kann beispielsweise der in Figur 2 mit 22 bezeichnete Drehzahlsensor verwendet werden, der die Drehzahl eines Abtriebs- beziehungsweise Sekundärkegelradpaares 32 erfasst.'

Beim Schritt S4 wird die Getriebedrehzahlübersetzung ji bestimmt, indem der Quotient npm/nse aus der beim Schritt S2 erfassten Primärdrehzahl npm und der beim Schritt S3 erfassten Sekundärdrehzahl nse gebildet wird.

Beim Schritt S5 wird der Kompensationsterm K bestimmt. Dieser Kompensationsterm K ist bei der dargestellten Ausführungsform dazu vorgesehen, relativ langsame Änderungen der Getriebedrehzahlübersetzung ji zu kompensieren. Obwohl bei bestimmten Ausführungsform des erfindungsgemäßen Verfahrens eine Medianwertbildung zur Bestimmung des Kompensationsterms eingesetzt werden kann, wird der Kompensationsterm K bei der dargestellten Ausführungsform wie folgt bestimmt:

$$K = [ji(n+4) - ji(n-4)] / 8,$$

wobei K den Kompensationsterm, ji die Getriebedrehzahlübersetzung und n einen Index beziehungsweise ein Rechenraster bezeichnet.

Beim Schritt S6 wird der Normierungsterm N bestimmt. Der Normierungsterm N dient zur Anpassung der Schlupfänderung an verschiedene Drehzahlbereiche und wird wie folgt bestimmt:

$$N = [ji(n)]^3,$$

wobei N den Normierungsterm, ji die Getriebedrehzahlübersetzung und n einen Index beziehungsweise ein Rechenraster bezeichnet.

Beim Schritt S7 wird die Schlupfänderung ds(n) nach der folgenden Formel bestimmt:

$$ds(n) = ([ji(n+1) - ji(n)] - K) / N,$$

wobei ds die Schlupfänderung, n einen Index beziehungsweise ein Rechenraster, ji die Getriebedrehzahlübersetzung, K einen Kompensationsterm und N einen Normierungsterm bezeichnet.

Beim Schritt S8 wird überprüft, ob die in Schritt S7 bestimmte Schlupfänderung ds (n) ≥ einem vorherbestimmten Schwellenwert SW ist. Der Schwellenwert SW wird betriebspunktabhängig appliziert, in Abhängigkeit von der Last, dem Motormoment, der Motordrehzahl und der Übersetzung. Sofern die Schlupfänderung ds(n) nicht ≥ dem Schwellenwert SW ist, wird zurück zum Schritt S2 verzweigt, da kein Schlupf erkannt wurde. Wenn die Schlupfänderung ds (n) ≥ dem Schwellenwert SW ist, wurde ein Schlupf erkannt und es wird zum Schritt S9 verzweigt.

Beim Schritt S9 werden geeignete Gegenmaßnahmen eingeleitet. Beispielsweise wenn das Umschlingungsgetriebe durch das in Figur 2 dargestellte CVT-Getriebe 10 gebildet ist, bei dem ein Umschlingungsteil 34 mit einem einstellbaren Anpressdruck um zwei Kegelradpaare 30, 32 umläuft, können die Gegenmaßnahmen eine Erhöhung des Anpressdruckes erfassen.

Beim Schritt S10 wird überprüft, ob die erfindungsgemäße Schlupferkennung fortgeführt werden soll. Ist dies der Fall, so wird zum Schritt S2 zurückverzweigt und der Verfahrensablauf wird erneut durchgeführt. Sofern keine erneute Durchführung des Verfahrens erwünscht ist, wird zum Schritt S11 verzweigt, wo das Verfahren endet.

Figur 2 zeigt eine schematische Darstellung, die das Zusammenwirken eines Systems mit einem CVT-Getriebe veranschaulicht. Gemäß der Darstellung von Figur 2 weist das insgesamt mit 10 bezeichnete CVT-Getriebe zwei Kegelradpaare 30, 32 auf. Dabei ist das Kegelradpaar 30 mit einem Antrieb verbunden, der im dargestellten Fall durch ein Verbrennungsmotor 12 gebildet ist. Das Kegelradpaar 30 wird daher als Antriebs- beziehungsweise Primärkegelradpaar 30 bezeichnet. Das andere Kegelradpaar 32 ist mit einem Abtrieb 26 verbunden, der im dargestellten Fall in bekannter Weise mit einer angetriebenen Achse 28 eines Kraftfahrzeuges in Verbindung steht. Das Kegelradpaar 32 wird daher als Abtriebs- beziehungsweise Sekundärkegelradpaar 32 bezeichnet. Das beide Kegelradpaare 30, 32 umschlingende Umschlingungsteil ist in Form eines Schubgliederbandes 34 dargestellt. Zur Einstellung des Übersetzungsverhältnisses von Primärdrehzahl npm zu Abtriebsdrehzahl nse (und zur Einstellung der Spannung des Schubgliederbandes 34) weist jedes der Kegelradpaare 30, 32 jeweils ein axial feststehendes und ein axial bewegliches Kegelrad auf. Eine von einer Hydraulikansteuerung 16 angesteuerte Hydraulik 14 ist dazu vorgesehen, die axial beweglichen Kegelräder jeweils mit einem geeigneten Anpressdruck in Richtung auf die axial feststehenden Kegelräder zuzudrücken und damit das Übersetzungsverhältnis zu variieren. Bei der in Figur 2 dargestellten Ausführungsform wird die Primärdrehzahl durch einen Primärdrehzahlsensor 20 erfasst, der dem erfindungsgemäßen System 18, das Bestandteil einer Motorsteuerung beziehungsweise -regelung sein kann, ein Primärdrehzahlsignal zugeführt. Entsprechend ist ein Sekundärdrehzahlsensor 22 vorgesehen, der dem System 18 ein Sekundärdrehzahlsignal zuführt. Im dargestellten Fall ist das System 18 weiterhin mit hier nicht näher interessierenden Stellgliedern 24 verbunden, die dem Antriebsmotor 12 zugeordnet sind. Dem System 18 wird weiterhin ein Signal LA zugeführt, das im dargestellten Fall die Leistungsanforderung des Fahrers angibt. Das in Figur 2 angedeutete System 18 erkennt einen Schlupf des Umschlingungsteils 34 über die Beurteilung der Änderung der Getriebedrehzahlübersetzung ji, wobei sich diese Getriebedrehzahlübersetzung aus dem Quotienten der Primärdrehzahl und der Sekundärdrehzahl ergibt, die über die Sensoren 20, 22 erfasst werden. Das System 18 kann beispielsweise derart arbeiten, dass sich der anhand von Figur 1 erläuterte Verfahrensablauf ergibt, weshalb zur Vermeidung von Wiederholungen auf die diesbezüglichen Ausführungen verwiesen wird.

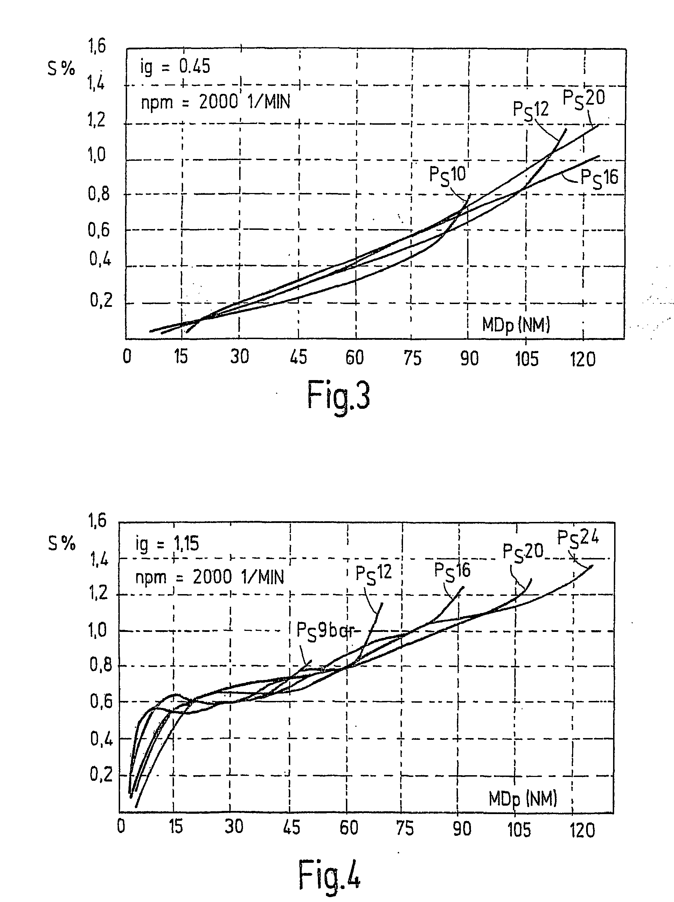

Figur 3 zeigt den Schlupf in Abhängigkeit vom Motormoment bei einer ersten geometrischen Getriebeübersetzung und einem Hydraulikanpressdruck von 10 bar, 12 bar, 16 bar und 20 bar. Dabei ist auf der X-Achse das Motormoment in Newtonmetern aufgetragen, während auf der Y-Achse der Schlupf s in Prozent aufgetragen ist. Bei der Darstellung von Figur 3 wurde eine geometrische Getriebeübersetzung von 0,45 und eine Primärdrehzahl npm von 2000 1/min verwendet. Die Kurve $P_s$ 10 zeigt den Verlauf für einen Hydraulikanpressdruck von 10 bar. Entsprechend zeigt die Kurve $P_s$ 12 den Verlauf für ein Hydraulikanpressdruck von 12 bar, die Kurve $P_s$ 16 zeigt den Verlauf für 16 bar und die Kurve $P_s$ 20 zeigt den Verlauf für einen Hydraulikanpressdruck von 20 bar. Der Darstellung von Figur 3 ist zu entnehmen, dass sich bei einer geometrischen Getriebeübersetzung von 0,45 ein höherer Anpressdruck erst bei höheren Motormomenten positiv- auf das Schlupfverhalten auswirkt.

Figur 4 zeigt den Schlupf in Abhängigkeit vom Motormoment bei einer zweiten geometrischen Getriebeübersetzung und einem Hydraulikanpressdruck von 9 bar, 12 bar, 16 bar, 20 bar und 24 bar. Dabei ist auf der X-Achse das Motormoment in Newtonmetern aufgetragen, während auf der Y-Achse der Schlupf s in Prozent aufgetragen ist. Bei der Darstellung von Figur 4 wurde eine geometrische Getriebeübersetzung von 1,15 und eine Primärdrehzahl npm von 2000 1/min verwendet. Die Kurve $P_s$ 9 zeigt den Verlauf für einen Hydraulikanpressdruck von 9 bar. Entsprechend zeigt die Kurve $P_s$ 12 den Verlauf für ein Hydraulikanpressdruck von 12 bar, die Kurve $P_s$ 16 zeigt den Verlauf für 16 bar, die Kurve $P_s$ 20 zeigt den Verlauf für einen Hydraulikanpressdruck von 20 bar und die Kurve $P_s$ 24 zeigt den Verlauf für einen Hydraulikanpressdruck von 24 bar. Der Darstellung von Figur 4 ist zu entnehmen, dass bei einem geometrischen Getriebeübersetzungsverhältnis von 1,15 ab einem Motormoment von zirka 45 Nm die Erhöhung des Anpressdruckes dazu beiträgt, den Schlupf gering zu halten.

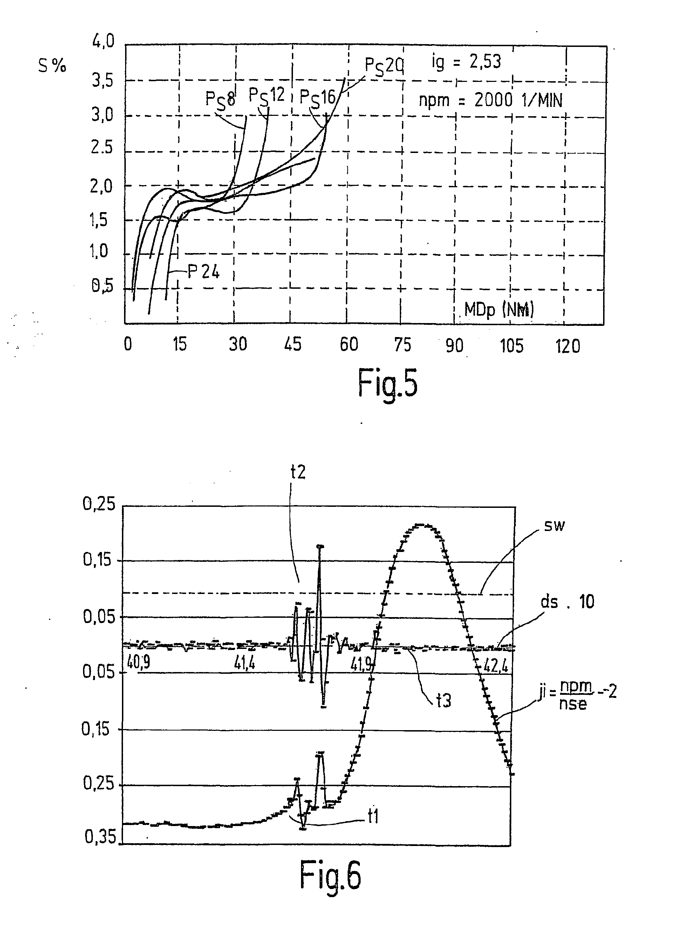

Figur 5 zeigt den Schlupf in Abhängigkeit vom Motormoment bei einer dritten geometrischen Getriebeübersetzung und einem Hydraulikanpressdruck von 8 bar, 12 bar, 16 bar, 20 bar und 24 bar. Dabei ist auf der X-Achse das Motormoment in Newtonmetern aufgetragen, während auf der Y-Achse der Schlupf s in Prozent aufgetragen ist. Bei der Darstellung von Figur 5 wurde eine geometrische Getriebeübersetzung von 2,53 und eine Primärdrehzahl npm von 2000 1/min verwendet. Die Kurve $P_s$ 8 zeigt den Verlauf für einen Hydraulikanpressdruck von 8 bar. Entsprechend zeigt die Kurze $P_s$ 12 den Verlauf für ein Hydraulikanpressdruck von 12 bar, die Kurve $P_s$ 16 zeigt den Verlauf für 16 bar, die Kurve $P_s$ 20 zeigt den Verlauf für einen Hydraulikanpressdruck von 20 bar und die Kurve $P_s$ 24 zeigt den Verlauf für einen Hydraulikanpressdruck von 24 bar. Die Darstellung von Figur 5 zeigt, dass bei einem geometrischen Getriebeübersetzungsverhältnis von 2,53 bereits bei deutlich kleineren Motormomenten mit dem Auftreten eines Schlupfes zu rechnen ist. Auch in diesem Fall kann eine Erhöhung des Anpressdruckes jedoch zur Verringerung des Schlupfes herangezogen werden, wie dies den dargestellten Kurvenverläufen zu entnehmen ist.

Figur 6 zeigt ein Beispiel für den zeitlichen Verlauf des Schlupfes und der Schlupfänderung beim abrupten Schließen der Vortwärtskupplung eines. CVT-Getriebes. Gemäß der Darstellung von Figur 6 wird zum Zeitpunkt t1 die Vorwärtskupplung des CVT-Getriebes geschlossen.

Durch einen Vergleich der Schlupfänderung ds mit einem Schwellenwert SW kann bereits zum Zeitpunkt t2 das Auftreten eines Schlupfes erkannt werden. Zum Zeitpunkt t3 ist die Schlupfänderung ds, trotz einer schnellen Übersetzungsverstellung, wieder ungefähr gleich 0, was durch die Verwendung des bereits erläuterten Kompensationsterms erzielt wird.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

Beschreibung für folgende(n) Vertragsstaat(en) : DE

Die vorliegende Erfindung betrifft ein Verfahren zum Erkennen eines Schlupfes eines Umschlingungsteils eines eine Getriebedrehzahlübersetzung aufweisenden Umschlingungsgetriebes, insbesondere eines CVT-Getriebes.

Die Erfindung betrifft weiterhin ein System zum Erkennen eines Schlupfes eines Umschlingungsteils eines eine Getriebedrehzahlübersetzung aufweisenden Umschlingungsgetriebes, insbesondere eines CVT-Getriebes.

### Stand der Technik

Bei Umschlingungsgetrieben ist es problematisch, wenn das Umschlingungsteil, das Momente zwischen zwei rotierenden Elementen überträgt, einen Schlupf aufweist, das heißt durchdreht beziehungsweise durchrutscht. In diesem Fall kann es zu starken Schädigungen des Umschlingungsgetriebes kommen, insbesondere zu einem erhöhten Verschleiß des Umschlingungsteils. Mitunter kann das Getriebe zerstört werden, wenn ein zu starker Schlupf des Umschlingungsteils auftritt.

Die vorstehende Problematik ist insbesondere bei CVT-Getrieben relevant. CVT-Getriebe sind stufenlos arbeitende Getriebe (CVT = "Continously Variable Transmission"). Sie umfassen im Wesentlichen zwei Kegelradpaare und ein beispielsweise als Schubgliederband ausgelegtes Umschlingungsteil. Dabei ist eines der Kegelradpaare mit einem Antrieb verbunden, beispielsweise einem Verbrennungsmotor, während das andere Kegelradpaar mit einem Abtrieb verbunden ist. Zur Einstellung der Übersetzung des CVT-Getriebes und der Spannung des Umschlingungsteils bestehen das Antriebskegelradpaar und das Abtriebskegelradpaar im Allgemeinen aus je einem axial feststehenden und einem axial beweglichen Kegelrad. Das Antriebskegelradpaar wird auch als Antriebsscheibe oder Primärscheibe bezeichnet; das Abtriebskegelradpaar wird auch als Abtriebsscheibe oder Sekundärscheibe bezeichnet. Die Anpressung der axial beweglichen Kegelräder gegen das Umschlingungsteil erfolgt im Allgemeinen durch Aufbau eines hydraulischen Drucks, beispielsweise durch eine Pumpe. Durch eine geeignete Wahl der Anpressdrücke kann die gewünschte Übersetzung des CVT-Getiebes und die erforderliche Spannung des Umschlingungsteils eingestellt werden. Die Pumpe für den hydraulischen Antrieb der Kegelräder kann beispielsweise durch den Verbrennungsmotor angetrieben werden. Für die Kraftübertragung vom Verbrennungsmotor zum Antriebskegelradpaar kann beispielsweise ein Drehmomentenwandler und ein Planetensatz mit Kupplungen für Vorwärts- und Rückwärtsfahrt vorhanden sein. Durch eine Erhöhung des Anpressdruckes kann zwar ein Schlupfen des Umschlingungsteils in der Regel vermieden werden, ein erhöhter Anpressdruck führt jedoch zu einer unerwünschten Erhöhung der Verluste, beispielsweise der Pumpenverluste. Die Regelung beziehungsweise Steuerung des Anpressdruckes muss deshalb ein Optimum zwischen minimalen Druckverlusten einerseits und dem zu vermeidenden Schlupf andererseits finden. In diesem Zusammenhang ist es bereits bekannt, eine Druckreserve aufzubauen, um einen Schlupf des Umschlingungsteils zu vermeiden, der beispielsweise durch die Dynamik und Störeinkopplungen verursacht werden könnte, die von den Fahrbahneigenschaften abhängig sind.

Das Dokument US 6099424A offenbart ein Verfahren nach dem Oberbegriff des Anspruchs 1.

Um ein unerwünschtes Auftreten eines Schlupfes des Umschlingungsteils vermeiden zu können, ist es in jedem Fall erforderlich, einen entsprechenden Schlupf rechtzeitig zu erkennen.

Vorteile der Erfindung

Das erfindungsgemäße Verfahren zum Erkennen eines Schlupfes des Umschlingungsteils baut auf dem Stand der Technik dadurch auf, dass ein Schlupf des Umschlingungsteils über die Beurteilung der Änderung der Getriebedrehzahlübersetzung erkannt wird, wobei die Beurteilung der Getriebedrehzahlübersetzung die Unterscheidung zwischen relativ langsamen Änderungen der Getriebedrehzahlübersetzung und relativ schnellen Änderungen der Getriebedrehzahlübersetzung umfasst, und der Verschleißzustand des Umschlingungsteils in Abhängigkeit vom erkannten Schlupf des Umschlingungsteils bestimmt wird. Die Getriebedrehzahlübersetzung kann dabei über einen Quotienten aus der Primärdrehzahl, beispielsweise eines Antriebskegelradpaares, und einer Sekundärdrehzahl, beispielsweise der Drehzahl eines Abtriebskegelradpaares, bestimmt werden. Die Primärdrehzahl und die Sekundärdrehzahl werden bei Umschlingungsgetrieben ohnehin standardmäßig erfasst, so dass diesbezüglich kein zusätzlicher Hardwareaufwand erforderlich ist. Durch die erfindungsgemäße Lösung können beispielsweise bereits beim ersten Erkennen eines Schlupfes Gegenmaßnahmen eingeleitet werden, bevor es zu einer Zerstörung des Umschlingungsteils, beispielsweise eines Schubgliederbandes, oder zu einem erhöhten Verschleiß kommt.

Der erfasste Schlupf kann dabei beispielsweise in die Abschätzung der Alterung beziehungsweise des Verschleißes des Schubgliederbandes eingehen, wie sie in der Offenlegungsschrift DE 100 28 459 A1 erläutert ist. Gemäß der Lehre dieser Druckschrift wird beispielsweise ein Alterungswert des Schubgliederbandes bestimmt, der unter anderem von der Betriebszeitdauer des Schubgliederbandes abhängt. Weitere Größen, die den Alterungswert beeinflussen, sind beispielsweise das Fahrverhalten und die Betriebsbedingungen, unter denen das Schubgliederband betrieben worden ist. In Abhängigkeit eines derartigen Alterungswertes ist es beispielsweise möglich, eine Sicherheitsreserve für die Spannung beziehungsweise den Anpressdruck des Schubgliederbandes zu bestimmen.

Dadurch, dass die Beurteilung der Getriebedrehzahlübersetzung die Unterscheidung zwischen relativ langsamen Änderungen der Getriebedrehzahlübersetzung und relativ schnellen Änderungen der Getriebedrehzahlübersetzung umfasst, kann zwischen üblichen Übersetzungsänderungen, beispielsweise aufgrund einer gewollten Übersetzungsverstellung, und Übersetzungsänderungen unterschieden werden, die auf ein schlupfendes Umschlingungsteil zurückzuführen sind. Übersetzungsänderungen aufgrund eines Schlupfes führen zu erheblich schnelleren Übersetzungsänderungen als Übersetzungsänderungen aufgrund beispielsweise einer Verstellung der Kegelscheiben. Aufgrund dieses Zusammenhanges ist es vorteilhaft, nur relativ schnelle Änderungen der Getriebedrehzahlübersetzung zur Bestimmung des Schlupfes heranzuziehen.

Bei vorteilhaften Weiterbildungen des erfindungsgemäßen Verfahrens ist weiterhin vorgesehen, dass bei der Erekennung eines Schlupfes Gegenmaßnahmen eingeleitet werden.

In diesem Zusammenhang kann bei dem erfindungsgemäßen Verfahren beispielsweise vorgesehen sein, dass das Umschlingungsteil mit einem einstellbaren Anpressdruck um zwei Kegelradpaare umläuft (wie dies eingangs im Zusammenhang mit CVT-Getrieben bereits erläutert wurde) und dass die Gegenmaßnahmen eine Erhöhung des Anpressdruckes umfassen. Eine derartige Erhöhung des Anpressdruckes wird vorzugsweise nur für kurze Zeitabschnitte vorgesehen beziehungsweise fortlaufend auf ihre anhaltende Notwendigkeit überprüft, um die eingangs bereits erwähnten Verluste so gering wie möglich zu halten.

Insbesondere in dem vorliegend erläuterten Zusammenhang kann bei dem erfindungsgemäßen Verfahren vorgesehen sein, dass das Umschlingungsteil mit einem einstellbaren Anpressdruck um Kegelradpaare umläuft, und dass der Anpressdruck in Abhängigkeit vom Verschleißzustand des Umschlingungsteils eingestellt wird. Auch in diesem Fall wird der Anpressdruck jedoch vorzugsweise nur maßvoll erhöht, um die Verluste des Getriebes nicht unnötig zu erhöhen.

Bei einer bevorzugten Ausführungsform des erfindungsgemäßen Verfahrens ist vorgesehen, dass der Schlupf wie folgt definiert wird:

$$s = 1 - (ig/ji),$$

wobei s den Schlupf, ig eine geometrische Getriebeübersetzung und ji die Getriebedrehzahlübersetzung bezeichnet. Die geometrische Getriebeübersetzung kann bei einem CVT-Getriebe durch eine Verstellung der Kegelscheiben eingestellt werden. Die Erfassung der geometrischen Übersetzung kann beispielsweise mit einem Wegsensor beziehungsweise durch eine Abstandsmessung erfolgen.

Insbesondere in diesem Zusammenhang kann bei bevorzugten Ausführungsformen des erfindungsgemäßen Verfahrens vorgesehen sein, dass die geometrische Getriebeübersetzung als ein konstanter Wert angenommen wird. Diese Annahme gilt näherungsweise für einen kleinen Zeitbereich beziehungsweise für eine kleine Zeitdauer. Wenn der Schlupf durch die vorstehend erläuterte Formel bestimmt wird, hängt dieser bei einer konstanten geometrischen Übersetzung ausschließlich von der Getriebedrehzahlübersetzung ab. Anders ausgedrückt, ist eine Änderung des Schlupfes in diesem Fall proportional zu einer Änderung der Getriebedrehzahlübersetzung.

Bei dem erfindungsgemäßen Verfahren kann weiterhin vorgesehen sein, dass die geometrische Getriebeübersetzung auf den maximalen Wert der geometrischen Getriebeübersetzung gesetzt wird, wenn der Zustand "maximale Getriebeübersetzung" erkannt wird. Bei dieser Ausführungsform der Erfindung wird zur Bestimmung der geometrischen Getriebeübersetzung der Umstand herangezogen, dass in den Endlagen der Kegelscheiben die geometrische Übersetzung im Allgemeinen bekannt ist.. Das heißt, bei minimaler und maximaler Getriebeübersetzung ist die geometrische Übersetzung aufgrund von konstruktiven Vorgaben bekannt. Die Erkennung der maximalen Übersetzung kann beispielsweise von dem erfindungsgemäßen System anhand der Übersetzungsregelung erfolgen.

Aus dem Vorstehenden ergibt sich, dass das erfindungsgemäße Verfahren ebenfalls vorsehen kann, dass die geometrische Getriebeübersetzung auf den minimalen Wert der geometrischen Getriebeübersetzung gesetzt wird, wenn der Zustand "minimale Getriebeübersetzung" erkannt wird.

Insbesondere in diesem Zusammenhang kann das erfindungsgemäße Verfahren weiterhin vorsehen, dass die Schlupferkennung im Wesentlichen nur im Zustand "maximale Getriebeübersetzung" erfolgt.

In ähnlicher Weise kann das erfindungsgemäße Verfahren zusätzlich oder alternativ vorsehen, dass die Schlupferkennung im Wesentlichen nur im Zustand "minimale Getriebeübersetzung" erfolgt.

Insbesondere wenn die geometrische Getriebeübersetzung als ein konstanter Wert angenommen wird, ist bei dem erfindungsgemäßen Verfahren vorzugsweise weiterhin vorgesehen, dass eine Schlupfänderung wie folgt bestimmt wird:

$$ds(n) = ([ji(n+1) - ji(n)] - K) / N,$$

wobei ds die Schlupfänderung, n einen Index beziehungsweise ein Rechenraster, ji die Getriebedrehzahlübersetzung, K einen Kompensationsterm und N einen Normierungsterm bezeichnet. Zur Erkennung eines Schlupfes kann die Schlupfänderung in vorteilhafter Weise mit einem Schwellenwert verglichen werden. Dieser Schwellenwert wird vorzugsweise betriebspunktabhängig appliziert, wobei beilspielsweise die Last, das Motormoment, die Motordrehzahl und die Übersetzung berücksichtigt werden können.

Bei vorteilhaften Weiterbildungen des erfindungsgemäßen Verfahrens ist in diesem Zusammenhang weiterhin vorgesehen, dass der Kompensationsterm zur Kompensation von relativ langsamen Änderungen der Getriebedrehzahlübersetzung vorgesehen ist. Die relativ langsamen Änderungen der Getriebedrehzahlübersetzung sind in der Regel durch gewollte Verstellungen der Übersetzung begründet und daher für eine Erkennung des Schlupfes von untergeordneter Bedeutung.

In diesem Zusammenhang kann bei dem erfindungemäßen Verfahren weiterhin vorgesehen sein, dass der Kompensationsterm über eine Medianwertbildung bestimmt wird. Bei der Bildung eines Medianwertes erfolgt, im Gegensatz zur Bildung eines arithmetischen Mittelwertes, kein Summieren mehrerer Werte und ein Dividieren durch die Anzahl der Werte, sondern die Werte werden der Größe nach geordnet und der bezogen auf diese Ordnung mittlere Wert stellt den Medianwert dar. Es hat sich gezeigt, dass eine Medianwertbildung ausgezeichnet dazu geeignet ist, Effekte von Beschleunigungen und Verzögerungen für eine größere Klasse als der linearen praktisch vollständig zu kompensieren.

Zusätzlich oder alternativ kann beim erfindungsgemäßen Verfahren vorgesehen sein, dass der Kompensationsterm über eine Mittelwertbildung bestimmt wird. Bei einer derartigen Mittelwertbildung kann es sich beispielsweise um die Bildung eines arithmetischen Mittelwertes handeln.

Insbesondere im vorstehend erläuterten Zusammenhang kann bei dem erfindungsgemäßen Verfahren beispielsweise vorgesehen sein, dass der Kompensationsterm wie folgt bestimmt wird:

$$K = [ji(n+4) - ji(n-4)] / 8,$$

wobei K den Kompensationsterm, ji die Getriebedrehzahlübersetzung und n einen Index beziehungsweise ein Rechenraster bezeichnet. Selbstverständlich sind auch Ausführungsformen denkbar, bei denen eine andere Anzahl als 8 Rechenraster berücksichtigt werden.

Bei dem erfindungsgemäßen Verfahren kann weiterhin vorgesehen sein, dass der Normierungsterm zur Anpassung der Schlupfänderung an verschiedene Drehzahlbereiche vorgesehen ist.

Insbesondere in diesem Zusammenhang kann bei dem erfindungsgemäßen Verfahren beispielsweise vorgesehen sein, dass der Normierungsterm wie folgt bestimmt wird:

$$N = [ji(n)]^3,$$

wobei N den Normierungsterm, ji die Getriebedrehzahlübersetzung und n einen Index beziehungsweise ein Rechenraster bezeichnet.

**Zeichnungen**

Die Erfindung wird nachfolgend anhand der zugehörigen Zeichnungen noch näher erläutert.

Es zeigen:

Figur 1    ein Flussdiagramm, das die Durchführung einer Ausführungsform des erfindungsgemäßen Verfahrens veranschaulicht,

Figur 2    eine schematische Darstellung, die das Zusammenwirken eines Systems mit einem CVT-Getriebe veranschaulicht,

Figur 3    den Schlupf in Abhängigkeit vom Motormoment bei einer ersten geometrischen Getriebeübersetzung und einem Hydraulikanpressdruck von 10 bar, 12 bar, 16 bar und 20 bar,

Figur 4    den Schlupf in Abhängigkeit vom Motormoment bei einer zweiten geometrischen Getriebeübersetzung und einem Hydraulikanpressdruck von 9 bar, 12 bar, 16 bar, 20 bar und 24 bar,

Figur 5    den Schlupf in Abhängigkeit vom Motormoment bei einer dritten geometrischen Getriebeübersetzung und einem Hydraulikanpressdruck von 8 bar, 12 bar, 16 bar, 20 bar und 24 bar, und

Figur 6    ein Beispiel für den zeitlichen Verlauf des Schlupfes und der Schlupfänderung beim abrupten Schließen der Vorwärtskupplung eines CVT-Getriebes.

**Beschreibung der Ausführungsbeispiele**

Figur 1 zeigt ein Flussdiagramm, das die Durchführung einer Ausführungsform des erfindungsgemäßen Verfahrens veranschaulicht. Dabei ergibt sich die Bedeutung der in Figur 1 dargestellten Schritte S1 bis S11 aus der folgenden Tabelle.

| Schritt | Bedeutung |
|---------|-----------|
| S1 | Start |
| S2 | Erfasse Primärdrehzahl npm |
| S3 | Erfasse Sekundärdrehzahl nse |
| S4 | Berechne Getriebedrehzahlübersetzung ji |
| S5 | Bestimme Kompensationsterm K |
| S6 | Bestimme Normierungsterm N |
| S7 | Bestimme Schlupfänderung ds(n) |
| S8 | Schlupfänderung ds (n) $\geq$ Schwellenwert SW? |
| S9 | Leite Gegenmaßnahmen ein |
| S10 | Ende? |
| S11 | Ende |

Die in Figur 1 dargestellte Ausführungsform des erfindungsgemäßen Verfahrens beginnt beim Schritt S1.

Beim Schritt S2 wird die Primärdrehzahl npm erfasst. Zu diesem Zweck kann beispielsweise der in Figur 2 mit 20 bezeichnete Drehzahlsensor eingesetzt werden, der ein Signal für die Drehzahl eines Antriebs- beziehungsweise Primärkegelradpaares 30 liefert.

Beim Schritt S3 wird die Sekundärdrehzahl nse erfasst. Hierzu kann beispielsweise der in Figur 2 mit 22 bezeichnete Drehzahlsensor verwendet werden, der die Drehzahl eines Abtriebs- beziehungsweise Sekundärkegelradpaares 32 erfasst.

Beim Schritt S4 wird die Getriebedrehzahlübersetzung ji bestimmt, indem der Quotient npm/nse aus der beim Schritt S2 erfassten Primärdrehzahl npm und der beim Schritt S3 erfassten Sekundärdrehzahl nse gebildet wird.

Beim Schritt S5 wird der Kompensationsterm K bestimmt. Dieser Kompensationsterm K ist bei der dargestellten Ausführungsform dazu vorgesehen, relativ langsame Änderungen der Getriebedrehzahlübersetzung ji zu kompensieren. Obwohl bei bestimmten Ausführungsform des erfindungsgemäßen Verfahrens eine Medianwertbildung zur Bestimmung des Kompensationsterms eingesetzt werden kann, wird der Kompensationsterm K bei der dargestellten Ausführungsform wie folgt bestimmt:

$$K = [ji(n+4) - ji(n-4)] / 8,$$

wobei K den Kompensationsterm, ji die Getriebedrehzahlübersetzung und n einen Index beziehungsweise ein Rechenraster bezeichnet.

Beim Schritt S6 wird der Normierungsterm N bestimmt. Der Normierungsterm N dient zur Anpassung der Schlupfänderung an verschiedene Drehzahlbereiche und wird wie folgt bestimmt:

$$N = [ji(n)]^3,$$

wobei N den Normierungsterm, ji die Getriebedrehzahlübersetzung und n einen Index beziehungsweise ein Rechenraster bezeichnet.

Beim Schritt S7 wird die Schlupfänderung ds(n) nach der folgenden Formel bestimmt:

$$ds(n) = ([ji(n+1) - ji(n)] - K) / N,$$

wobei ds die Schlupfänderung, n einen Index beziehungsweise ein Rechenraster, ji die Getriebedrehzahlübersetzung, K einen Kompensationsterm und N einen Normierungsterm bezeichnet.

Beim Schritt S8 wird überprüft, ob die in Schritt S7 bestimmte Schlupfänderung ds (n) ≥ einem vorherbestimmten Schwellenwert SW ist. Der Schwellenwert SW wird betriebspunktabhängig appliziert, in Abhängigkeit von der Last, dem Motormoment, der Motordrehzahl und der Übersetzung. Sofern die Schlupfänderung ds(n) nicht ≥ dem Schwellenwert SW ist, wird zurück zum Schritt S2 verzweig, da kein Schlupf erkannt wurde. Wenn die Schlupfänderung ds (n) ≥ dem Schwellenwert SW ist, wurde ein Schlupf erkannt und es wird zum Schritt S9 verzweigt.

Beim Schritt S9 werden geeignete Gegenmaßnahmen eingeleitet. Beispielsweise wenn das Umschlingungsgetriebe durch das in Figur 2 dargestellte CVT-Getriebe 10 gebildet ist, bei dem ein Umschlingungsteil 34 mit einem einstellbaren Anpressdruck um zwei Kegelradpaare 30, 32 umläuft, können die Gegenmaßnahmen eine Erhöhung des Anpressdruckes erfassen.

Beim Schritt S10 wird überprüft, ob die erfindungsgemäße Schlupferkennung fortgeführt werden soll. Ist dies der Fall, so wird zum Schritt S2 zurückverzweigt und der Verfahrensablauf wird erneut durchgeführt. Sofern keine erneute Durchführung des Verfahrens erwünscht ist, wird zum Schritt S11 verzweigt, wo das Verfahren endet.

Figur 2 zeigt eine schematische Darstellung, die das Zusammenwirken eines Systems mit einem CVT-Getriebe veranschaulicht. Gemäß der Darstellung von Figur 2 weist das insgesamt mit 10 bezeichnete CVT-Getriebe zwei Kegelradpaare 30, 32 auf. Dabei ist das Kegelradpaar 30 mit einem Antrieb verbunden, der im dargestellten Fall durch ein Verbrennungsmotor 12 gebildet ist. Das Kegelradpaar 30 wird daher als Antriebs- beziehungsweise Primärkegelradpaar 30 bezeichnet. Das andere Kegelradpaar 32 ist mit einem Abtrieb 26 verbunden, der im dargestellten Fall in bekannter Weise mit einer angetriebenen Achse 28 eines Kraftfahrzeuges in Verbindung steht. Das Kegelradpaar 32 wird daher als Abtriebs- beziehungsweise Sekundärkegelradpaar 32 bezeichnet. Das beide Kegelradpaare 30, 32 umschlingende Umschlingungsteil ist in Form eines Schubgliederbandes 34 dargestellt. Zur Einstellung des Übersetzungsverhältnisses von Primärdrehzahl npm zu Abtriebsdrehzahl nse (und zur Einstellung der Spannung des Schubgliederbandes 34) weist jedes der Kegelradpaare 30, 32 jeweils ein axial feststehendes und ein axial bewegliches Kegelrad auf. Eine von einer Hydraulikansteuerung 16 angesteuerte Hydraulik 14 ist dazu vorgesehen, die axial beweglichen Kegelräder jeweils mit einem geeigneten Anpressdruck in Richtung auf die axial feststehenden Kegelräder zuzudrücken und damit das Übersetzungsverhältnis zu variieren. Bei der in Figur 2 dargestellten Ausführungsform wird die Primärdrehzahl durch einen Primärdrehzahlsensor 20 erfasst, der dem erfindungsgemäßen System 18, das Bestandteil einer Motorsteuerung beziehungsweise -regelung sein kann, ein Primärdrehzahlsignal zugeführt. Entsprechend ist ein Sekundärdrehzahlsensor 22 vorgesehen, der dem System 18 ein Sekundärdrehzahlsignal zuführt. Im dargestellten Fall ist das System 18 weiterhin mit hier nicht näher interessierenden Stellgliedern 24 verbunden, die dem Antriebsmotor 12 zugeordnet sind. Dem System 18 wird weiterhin ein Signal LA zugeführt, das im dargestellten Fall die Leistungsanforderung des Fahrers angibt. Das in Figur 2 angedeutete System 18 erkennt einen Schlupf des Umschlingungsteils 34 über die Beurteilung der Änderung der Getriebedrehzahlübersetzung ji, wobei sich diese Getriebedrehzahlübersetzung aus dem Quotienten der Primärdrehzahl und der Sekundärdrehzahl ergibt, die über die Sensoren 20, 22 erfasst werden. Das System 18 kann beispielsweise derart arbeiten, dass sich der anhand von Figur 1 erläuterte Verfahrensablauf ergibt, weshalb zur Vermeidung von Wiederholungen auf die diesbezüglichen Ausführungen verwiesen wird.

Figur 3 zeigt den Schlupf in Abhängigkeit vom Motormoment bei einer ersten geometrischen Getriebeübersetzung und einem Hydraulikanpressdruck von 10 bar, 12 bar, 16 bar und 20 bar. Dabei ist auf der X-Achse das Motormoment in Newtonmetern aufgetragen, während auf der Y-Achse der Schlupf s in Prozent aufgetragen ist. Bei der Darstellung von Figur 3 wurde eine geometrische Getriebeübersetzung von 0,45 und eine Primärdrehzahl npm von 2000 1/min verwendet. Die Kurve $P_s$ 10 zeigt den Verlauf für einen Hydraulikanpressdruck von 10 bar. Entsprechend zeigt die Kurve $P_s$ 12 den Verlauf für ein Hydraulikanpressdruck von 12 bar, die Kurve $P_s$ 16 zeigt den Verlauf für 16 bar und die Kurve $P_s$ 20 zeigt den Verlauf für einen Hydraulikanpressdruck von 20 bar. Der Darstellung von Figur 3 ist zu entnehmen, dass sich bei einer geometrischen Getriebeübersetzung von 0,45 ein höherer Anpressdruck erst bei höheren Motormomenten positiv auf das Schlupfverhalten auswirkt.

Figur 4 zeigt den Schlupf in Abhängigkeit vom Motormoment bei einer zweiten geometrischen Getriebeübersetzung und einem Hydraulikanpressdruck von 9 bar, 12 bar, 16 bar, 20 bar und 24 bar. Dabei ist auf der X-Achse das Motormoment in Newtonmetern aufgetragen, während auf der Y-Achse der Schlupf s in Prozent aufgetragen ist. Bei der Darstellung von Figur 4 wurde eine geometrische Getriebeübersetzung von 1,15 und eine Primärdrehzahl npm von 2000 1/min verwendet. Die Kurve $P_s$ 9 zeigt den Verlauf für einen Hydraulikanpressdruck von 9 bar. Entsprechend zeigt die Kurve $P_s$ 12 den Verlauf für ein Hydraulikanpressdruck von 12 bar, die Kurve $P_s$ 16 zeigt den Verlauf für 16 bar, die Kurve $P_s$ 20 zeigt den Verlauf für einen Hydraulikanpressdruck von 20 bar und die Kurve $P_s$ 24 zeigt den Verlauf für einen Hydraulikanpressdruck von 24 bar. Der Darstellung von Figur 4 ist zu entnehmen, dass bei einem geometrischen Getriebeübersetzungsverhältnis von 1,15 ab einem Motormoment von zirka 45 Nm die Erhöhung des Anpressdruckes dazu beiträgt, den Schlupf gering zu halten.

Figur 5 zeigt den Schlupf in Abhängigkeit vom Motormoment bei einer dritten geometrischen Getriebeübersetzung und einem Hydraulikanpressdruck von 8 bar, 12 bar, 16 bar, 20 bar und 24 bar. Dabei ist auf der X-Achse das Motormoment in Newtonmetern aufgetragen, während auf der Y-Achse der Schlupf s in Prozent aufgetragen ist. Bei der Darstellung von Figur 5 wurde eine geometrische Getriebeübersetzung von 2,53 und eine Primärdrehzahl npm von 2000 1/min verwendet. Die Kurve $P_s$ 8 zeigt den Verlauf für einen Hydraulikanpressdruck von 8 bar. Entsprechend zeigt die Kurve $P_s$ 12 den Verlauf für ein Hydraulikanpressdruck von 12 bar, die Kurve $P_s$ 16 zeigt den Verlauf für 16 bar, die Kurve $P_s$ 20 zeigt den Verlauf für einen Hydraulikanpressdruck von 20 bar und die Kurve $P_s$ 24 zeigt den Verlauf für einen Hydraulikanpressdruck von 24 bar. Die Darstellung von Figur 5 zeigt, dass bei einem geometrischen Getriebeübersetzungsverhältnis von 2,53 bereits bei deutlich kleineren Motormomenten mit dem Auftreten eines Schlupfes zu rechnen ist. Auch in diesem Fall kann eine Erhöhung des Anpressdruckes jedoch zur Verringerung des Schlupfes herangezogen werden, wie dies den dargestellten Kurvenverläufen zu entnehmen ist.

Figur 6 zeigt ein Beispiel für den zeitlichen Verlauf des Schlupfes und der Schlupfänderung beim abrupten Schließen der Vortwärtskupplung eines CVT-Getriebes. Gemäß der Darstellung von Figur 6 wird zum Zeitpunkt t1 die Vorwärtskupplung des CVT-Getriebes geschlossen.

Durch einen Vergleich der Schlupfänderung ds mit einem Schwellenwert SW kann bereits zum Zeitpunkt t2 das Auftreten eines Schlupfes erkannt werden. Zum Zeitpunkt t3 ist die Schlupfänderung ds, trotz einer schnellen Übersetzungsverstellung, wieder ungefähr gleich 0, was durch die Verwendung des bereits erläuterten Kompensationsterms erzielt wird.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

**Patentansprüche**

**Patentansprüche für folgende(n) Vertragsstaat(en): FR**

1. Verfahren zum Erkennen eines Schlupfes (s) eines Umschlingungsteils (34) eines eine Getriebeübersetzung (ji) aufweisenden Umschlingungsgetriebes (10), insbesondere eines CVT-Getriebes, **dadurch gekennzeichnet, dass** ein Schlupf des Umschlingungsteils (34) über die Beurteilung der Änderung der Getriebedrehzahlübersetzung (ji) erkannt wird, wobei die Beurteilung der Getriebedrehzahlübersetzung (ji) die Unterscheidung zwischen relativ langsamen Änderungen der Getriebedrehz ahlübersetzung (ji) und relativ schnellen Änderungen der Getriebedrehzahlübersetzung (ji) umfasst.

2. Verfahren nach Anspruch 1 , **dadurch gekennzeichnet, dass** bei der Erkennung eines Schlupfes (s) Gegenmaßnahmen eingeleitet werden.

3. Verfahren nach Anspruch 2, **dadurch gekennzeichnet, dass** das Umschlingungsteil mit einem einstellbaren Anpressdruck um zwei Kegelradpaare (30, 32) umläuft, und dass die Gegenmaßnahmen eine Erhöhung des Anpressdruckes umfassen.

4. Verfahren nach einem der vorstehenden Ansprüche, **dadurch gekennzeichnet, dass** der Verschleißzustand des Umsehtingungsteils (34) in Abhängigkeit vom erkannten Schlupf (s) des Umschlingungsteils (34) bestimmt wird.

5. Verfahren nach Anspruch 4, **dadurch gekennzeichnet, dass** das Umschlingungsteil (34) mit einem einstellbaren Anpressdruck um zwei Kegelradpaare (39, 32) umläuft, und dass der Anpressdruck in Abhängigkeit vom Verschleißzustand des Umschlingungsteils (34) eingestellt wird.

6. Verfahren nach einem der vorhergehenden Ansprüche, **dadurch gekennzeichnet, dass** der Schlupf (s) wie folgt definiert wird:

$$S = 1 - (ig/ji),$$

wobei s den Schlupf, ig eine geometrische Getriebeübersetzung und ji die Getriebedrehzahlübersetzung bezeichnet.

7. Verfahren nach einem der vorhergehenden Ansprüche, **dadurch gekennzeichnet, dass** die geometrische Getriebeübetsetzurig als ein konstanter Wert (c) angenommen wird.

8. Verfahren nach einem der vorhergehenden Ansprüche, **dadurch gekennzeichnet, dass** die geometrische Getriebeübersetzung (ji) auf den maximalen Wert der geometrieschen Getriebeübersetzung (jimax) gesetzt wird, wenn der Zustand "maximale Getriebeübersetzung" erkannt wird.

9. Verfahren nach einem der vorhergehenden Ansprüche, **dadurch gekennzeichnet, dass** die geometrische Getriebeübersetzung (ji) auf den minimalen Wert der geometrischen Getriebeübersetzung (jimin) gesetzt wird, wenn der Zustand "minimale Getriebeübersetzung" erkannt wird.

10. Verfahren nach einem der vorhergehenden Ansprüche, **dadurch gekennzeichnet, dass** die Schlupferkennung im Wesentlichen nur im Zustand "maximale Getriebeübersetzung" erfolgt.

11. Verfahren nach einem der vorhergehenden Ansprüche, **dadurch gekennzeichnet, dass** die Schlupferkennung im Wesentlichen nur im Zustand "minimale Getriebeübersetzung" erfolgt.

12. Verfahren nach einem der vorhergehenden Ansprüche, **dadurch gekennzeichnet, dass** eine Schlupferkennung (ds) wie folgt bestimmt wird:

$$ds\,(n) = ([ji(n+1) - ji\,(n)\,] - K)\,/\,N,$$

wobei ds die Schlupfänderung, n einen Index beziehungsweise ein Rechenraster, ji die Getriebedrehzahlübersetzung, K einen Kompensationsterm und N einen Normierungsterm bezeichnete.

13. Verfahren nach Anspruch 12, **dadurch gekennzeichnet, dass** der Kompensationsterm (K) zur Kompensation von relativ langsamen Änderungen oder Getriebedrehzählübersetzung (ji) vorgesehen ist.

14. Verfahren nach einem der Ansprüche 12 oder 13, **dadurch gekennzeichnet, dass** der kompensationsterm (K) über eine Medianwertbildung bestimmt wird.

15. Verfahren nach einem der Ansprüche 12 oder 13, **dadurch gekennzeichnet, dass** der Kompensationsterm (K) über eine Mittelwertbildung bestimmt wird.

16. Verfahren nach einem der Ansprüche 12 oder 13, **dadurch gekennzeichnet, dass** der Kompensationsterm (K) wie folgt bestimmt wird:

$$K = [ji\,(n + 4) - ji\,(n\text{-}4)]\,/\,8,$$

wobei K den Kompensationsterm, ji die Getnebedrehzahlübersetzung und n einen Index beziehungsweise ein Rechenraster bezeichnet.

17. Verfahren nach Anspruch 12, **dadurch gekennzeichnet, dass** der Normierungsterm (N) zur Anpassung der Schlupfäuderurig (ds) an verschiedene Drehzahlbereiche vorgesehen ist.

18. Verfahren nach Anspruch 12 oder 17, **dadurch gekennzeichnet, dass** der Normierungsterm (N) wie folgt bestimmt wird:

$$N = [ji\,(n)]^{3},$$

wobei N der Normierungsterm, ji die Getriebedrehzahlübersetzung und n einen Index beziehungsweise eine Re-

chenraster bezeichnet.

**Patentansprüche für folgende(n) Vertragsstaat(en): DE**

1. Verfahren zum Erkennen eines Schlupfes (s) eines Umschlingungsteils (34) eines eine Getriebeübersetzung (ji) aufweisenden Umschlingungsgetriebes (10), insbesondere eines CVT-Getriebes, **dadurch gekennzeichnet, dass** ein Schlupf des Umschlingungsteils (34) über die Beurteilung der Änderung der Getriebedrehzahlübersetzung (ji) erkannt wird, wobei die Beurteilung der Getriebedrehzahlübersetzung (ji) die Unterscheidung zwischen relativ langsamen Änderungen der Getriebedrehzahlübersetzung (ji) und relativ schnellen Änderungen der Getriebedrehzahlübersetzung (ji) umfasst, und dass der Verschleißzustand des Umschlingungsteils (34) in Abhängigkeit vom erkannten Schlupf (s) des Umschlingungsteils (34) bestimmt wird.

2. Verfahren nach Anspruch 1, **dadurch gekennzeichnet, dass** bei der Erkennung eines Schlupfes (s) Gegenmaßnahmen eingeleitet werden.

3. Verfahren nach Anspruch 2, **dadurch gekennzeichnet, dass** das Umschlingungsteil mit einem einstellbaren Anpressdruck um zwei Kegelradpaare (30, 32) umläuft, und dass die Gegenmaßnahmen eine Erhöhung des Anpressdruckes umfassen.

4. Verfahren nach Anspruch 1, **dadurch gekennzeichnet, dass** das Umschlingungsteil (34) mit einem einstellbaren Anpressdruck um zwei Kegelradpaare (39, 32) umläuft, und dass der Anpressdruck in Abhängigkeit vom Verschleißzustand des Umschlingungsteils (34) eingestellt wird.

5. Verfahren nach einem der vorhergehenden Ansprüche, **dadurch gekennzeichnet, dass** der Schlupf (s) wie folgt definiert wird:

$$S = 1 - (ig/ji),$$

wobei s den Schlupf, ig eine geometrische Getriebeübersetzung und ji die Getriebedrehzahlübersetzung bezeichnet.

6. Verfahren nach einem der vorhergehenden Ansprüche, **dadurch gekennzeichnet, dass** die geometrische Getriebeübersetzung als ein konstanter Wert (c) angenommen wird.

7. Verfahren nach einem der vorhergehenden Ansprüche, **dadurch gekennzeichnet, dass** die geometrische Getriebeübersetzung (ji) auf den maximalen Wert der geometrischen Getriebübersetzung (jimax) gesetzt wird, wenn der Zustand "maximale Getriebeübersetzung" erkannt wird.

8. Verfahren nach einem der vorhergehenden Ansprüche, **dadurch gekennzeichnet, dass** die geometrische Getriebeübersetzung (ji) auf den minimalen Wert der geometrischen Getriebeübersetzung (jimin) gesetzt wird, wenn der Zustand "minimale Getriebeübersetzung" erkannt wird.

9. Verfahren nach einem der vorhergehenden Ansprüche, **dadurch gekennzeichnet, dass** die Schlupferkennung im Wesentlichen nur im Zustand "maximale Getriebeübersetzung" erfolgt.

10. Verfahren nach einem der vorhergehenden Ansprüche, **dadurch gekennzeichnet, dass** die Schlupferkennung im Wesentlichen nur im Zustand "minimale Getriebeübersetzung" erfolgt.

11. Verfahren nach einem der vorhergehenden Ansprüche, **dadurch gekennzeichnet, dass** eine Schlupferkennung (ds) wie folgt bestimmt wird:

$$ds\,(n) = ([ji(n+1) - ji\,(n)\,] - K)\,/\,N,$$

wobei ds die Schlupfänderung, n einen Index beziehungsweise ein Rechenraster, ji die Getriebedrehzahlübersetzung, K einen Kompensationsterm und N einen Normierungsterm bezeichnet.

**12.** Verfahren nach Anspruch 11, **dadurch gekennzeichnet, dass** der Kompensationsterm (K) zur Kompensation von relativ langsamen Änderungen oder Getriebedrehzahlübersetzung (ji) vorgesehen ist.

**13.** Verfahren nach einem der Ansprüche 11 oder 12, **dadurch gekennzeichnet, dass** der Kompensationsterm (K) über eine Medianwertbildung bestimmt wird.

**14.** Verfahren nach einem der Ansprüche 11 oder 12, **dadurch gekennzeichnet, dass** der Kompensationsterm (K) über eine Mittelwertbildung bestimmt wird.

**15.** Verfahren nach einem der Ansprüche 11 oder 12, **dadurch gekennzeichnet, dass** der Kompensationsterm (K) wie folgt bestimmt wird:

$$K = [ji\,(n + 4) - ji\,(n\text{-}4)] \,/\, 8,$$

wobei K den Kompensationsterm, ji die Getriebedrehzahlübersetzung und n einen Index beziehungsweise ein Rechenraster bezeichnet.

**16.** Verfahren nach Anspruch 11, **dadurch gekennzeichnet, dass** der Normierungsterm (N) zur Anpassung der Schlupfänderung (ds) an verschiedene Drehzahlbereiche vorgesehen ist.

**17.** Verfahren nach Anspruch 11 oder 16, **dadurch gekennzeichnet, dass** der Normierunesterm (N) wie folgt bestimmt wird:

$$N = [ji\,(n)]^{3},$$

wobei N der Normierungsterm, ji die Getriebdrehzahlübersetzung und n einen Index beziehungsweise eine Rechenraster bezeichnet.

**Revendications**

**Revendications pour l'(les) Etat(s) contractant(s) suivant(s): FR**

**1.** Procédé pour déceler le glissement (s) d'une pièce d'enroulement (34) d'une transmission (ji) ayant une transmission à enroulement (10) notamment une transmission à variation continue,
**caractérisé en ce qu'**
on détecte le glissement de la pièce d'enroulement (34) par l'évaluation de la variation de la démultiplication de la vitesse de rotation de la transmission (ji),
l'évaluation de la démultiplication de la vitesse de rotation de transmission (ji) consistant à distinguer entre les variations relativement lentes de la démultiplication de la vitesse de rotation de transmission (ji) et les variations relativement rapides de la démultiplication de vitesse de rotation de transmission (ji).

**2.** Procédé selon la revendication 1,
**caractérisé en ce qu'**
on prend des contremesures lorsqu'un glissement (s) est détecté.

**3.** Procédé selon la revendication 2,
**caractérise en ce que**
la pièce à enroulement tourne avec une pression d'application réglable autour de deux paires de pignons coniques (30, 32), et les contremesures consistent à augmenter la pression d'application.

4. Procédé selon les revendications précédentes,
**caractérise en ce que**
l'état d'usure de la pièce d'enroulement (34) est déterminé en fonction du glissement (s) détesté de la pièce à enroulement (34),

5. Procédé selon la revendication 4,
**caractérisé en ce que**
la pièce à enroulement (34) tourne avec une pression d'application réglable autour de deux paires de pignons coniques (39, 32), et
la pression d'application est réglée en fonction de l'état d'usure de la pièce d'enroulement (34).

6. Procédé selon les revendications précédentes,
**caractérisé en ce que**
le glissement (s) se définit par la relation suivante :

$$S = 1 - (ig/ji),$$

dans laquelle

    s représente le glissement,
    ig est la démultiplication géométrique de la transmission,
    ji est la démultiplication de la vitesse de rotation de la transmission.

7. Procédé selon les revendications précédentes,
**caractérisé en ce que**
la démultiplication géométrique de la transmission est supposée être une valeur constante (c).

8. Procédé selon les revendications précédentes,
**caractérisé en ce que**
la démultiplication géométrique de transmission (ji) est fixée à la valeur maximale de la démultiplication géométrique de transmission (jimax) si l'on détecte l'état « démultiplication de transmission maximale »,

9. Procédé selon les revendications précédentes,
**caractérisé en ce qu'**
on fixe la démultiplication géométrique de la transmission (ji) à la valeur minimale de la démultiplication géométrique de transmission (jimin) lorsqu'on détecte l'état « démultiplication de transmission minimale ».

10. Procédé selon les revendications précédentes,
**caractérise en ce que**
la détection du glissement se fait pratiquement seulement dans l'étant « démultiplication maximale de la transmission ».

11. Procédé selon les revendications précédentes,
**caractérisé en ce que**
la détection du glissement se fait pratiquement seulement dans l'état « démultiplication minimale de la transmission ».

12. Procédé selon les revendications précédentes,
**caractérisé en ce que**
la détection du glissement (ds) se fait selon la relation suivante :

$$ds\,(n) = \{[ji(n+1) - ji\,(n)] - K\}\,/\,N,$$

dans laquelle

ds représente la variation du glissement,
n représente un indice ou une trame de calcul,
ji représente la démultiplication de la vitesse de transmission,
K représente un terme de compensation,
N représente un terme de normalisation.

**13.** Procédé selon la revendication 12,
**caractérisé en ce que**
le terme de compensation (K) est prévu pour compenser des variations relativement lentes ou une démultiplication
de la vitesse de transmission (ji).

**14.** Procédé selon la revendication 12 ou 13,
**caractérisé en ce que**
le terme de compensation (K) est défini en formant une valeur médiane.

**15.** Procédé selon les revendications 12 ou 13,
**caractérisé en ce qu'**
on définit le terme de compensation (K) en formant une valeur moyenne.

**16.** Procédé selon les revendications 12 ou 13,
**caractérisé en ce qu'**
on définit le terme de compensation (K) par la relation suivante :

$$K = [ji\,(n + 4) - ji\,(n\text{-}4)] \; / \; 8,$$

dans laquelle

K représente le terme de compensation,
ji représente la démultiplication de la vitesse de rotation de la transmission,
n représente un indice ou une trame de calcul.

**17.** Procédé selon la revendication 12,
**caractérisé en ce que**
le terme de normalisation (N) est prévu pour adapter la variation de glissement (ds) à différentes plages de vitesses
de rotation.

**18.** Procédé selon la revendication 12 ou 17,
**caractérisé en ce que**
le terme de normalisation (N) se définit par la relation suivante :

$$N = [ji\,(n)]^3,$$

dans laquelle

N représente le terme de normalisation,
ji représente la démultiplication de la vitesse de rotation de la transmission,
n représente un indice ou une trame de calcul.

**Revendications pour l'(les) Etat(s) contractant(s) suivant(s): DE**

**1.** Procédé pour déceler le glissement (s) d'une pièce d'enroulement (34) d'une transmission (ji) ayant une transmission
à en roulement (10) notamment une transmission à variation continue,

**caractérisé en ce qu'**
on détecte le glissement de la pièce d'enroulement (34) par l'évaluation de la variation de la démultiplication de la vitesse de rotation de la transmission (ji),

l'évaluation de la démultiplication de la vitesse de rotation de transmission (ji) consistant à distinguer entre les variations relativement lentes de la démultiplication de la vitesse de rotation de transmission (ji) et les variations relativement rapides de la démultiplication de vitesse de rotation de transmission (ji), et

l'état d'usure de la pièce d'enroulement (34) est déterminé en fonction du glissement (s) détecté de la pièce à enroulement (34).

2. Procédé selon la revendication 1,
**caractérisé en ce qu'**
on prend des contremesures lorsqu'un glissement (s) est détecté.

3. Procédé selon la revendication 2,
**caractérisé en ce que**
la pièce à enroulement tourne avec une pression d'application réglable autour de deux paires de pignons coniques (30, 32), et les contremesures consistent à augmenter la pression d'application.

4. Procédé selon la revendication 1,
**caractérisé en ce que**
la pièce à enroulement (34) tourne avec une pression d'application réglable autour de deux paires de pignons coniques (39, 32), et
la pression d'application est réglée en fonction de l'état d'usure de la pièce d'enroulement (34).

5. Procédé selon les revendications précédentes,
**caractérisé en ce que**
le glissement (s) se définit par la relation suivante :

$$S = 1 - (ig/ji),$$

dans laquelle

    s représente le glissement,
    ig est la démultiplication géométrique de la transmission,
    ji est la démultiplication de la vitesse de rotation de la transmission.

6. Procédé selon les revendications précédentes,
**caractérisé en ce que**
la démultiplication géométrique de la transmission est supposée être une valeur constante (c).

7. Procédé selon les revendications précédentes,
**caractérisé en ce que**
la démultiplication géométrique de transmission (ji) est fixée à la valeur maximale de la démultiplication géométrique de transmission (jimax) si l'on détecte l'État « démultiplication de transmission maximale ».

8. Procédé selon les revendications précédentes,
**caractérisé en ce qu'**
on fixe la démultiplication géométrique de la transmission (ji) à la valeur minimale de la démultiplication géométrique de transmission (jimin) lorsqu'on détecte l'état « démultiplication de transmission minimale ».

9. Procédé selon les revendications précédentes,
**caractérisé en ce que**
la détection du glissement se fait pratiquement seulement dans l'étant « démultiplication maximale de la transmission ».

10. Procédé selon les revendications précédentes,

**caractérisé en ce que**
la détection du glissement se fait pratiquement seulement dans l'état « démultiplication minimale de la transmission ».

**11.** Procédé selon les revendications précédentes,
**caractérisé en ce que**
la détection du glissement (ds) se fait selon la relation suivante :

$$ds\ (n) = ([ji(n+1) - ji\ (n)] - K)\ /\ N,$$

dans laquelle

ds représente la variation du glissement,
n représente un indice ou une trame de calcul,
ji représente la démultiplication de la vitesse de transmission,
K représente un terme de compensation,
N représente un terme de normalisation.

**12.** Procédé selon la revendication 11,
**caractérisé en ce que**
le terme de compensation (K) est prévu pour compenser des variations relativement lentes ou une démultiplication de la vitesse de transmission (ji).

**13.** Procédé selon la revendication 11 ou 12,
**caractérisé en ce que**
le terme de compensation (K) est défini en formant une valeur médiane.

**14.** Procédé selon les revendications 11 ou 12,
**caractérisé en ce qu'**
on définit le terme de compensation (K) en formant une valeur moyenne.

**15.** Procédé selon les revendications 11 ou 12,
**caractérisé en ce qu'**
on définit le terme de compensation (K) par la relation suivante :

$$K = [ji\ (n + 4) - ji\ (n\text{-}4)]\ /\ 8,$$

dans laquelle

K représente le terme de compensation,
ji représente la démultiplication de la vitesse de rotation de la transmission,
n représente un indice ou une trame de calcul.

**16.** Procédé selon la revendication 11,
**caractérisé en ce que**
le terme de normalisation (N) est prévu pour adapter la variation de glissement (ds) à différentes plages de vitesses de rotation.

**17.** Procédé selon la revendication 11 ou 16,
**caractérisé en ce que**
le terme de normalisation (N) se définit par la relation suivante :

$$N = [ji\,(n)]^3,$$

dans laquelle

> N représente le terme de normalisation,
> ji représente la démultiplication de la vitesse de rotation de la transmission,
> n représente un indice ou une trame de calcul.

**Claims**

**Claims for the following Contracting State(s): FR**

1. Method for detecting slip (s) of a wrap-around part (34) of a wrap-around transmission (10), in particular of a CVT transmission, which has a transmission ratio (ji), **characterized in that** slip of the wrap-around part (34) is detected by assessing the change in the transmission rotational speed ratio (ji), with the assessment of the transmission rotational speed ratio (ji) comprising the distinction between relatively slow changes in the transmission rotational speed ratio (ji) and relatively fast changes in the transmission rotational speed ratio (ji).

2. Method according to Claim 1, **characterized in that**, in the event of slip (s) being detected, countermeasures are initiated.

3. Method according to Claim 2, **characterized in that** the wrap-around part runs around two cone-pulley pairs (30, 32) with an adjustable contact pressure, and **in that** the countermeasures comprise an increase in the contact pressure.

4. Method according to one of the preceding claims, **characterized in that** the wear state of the wrap-around part (34) is determined as a function of the detected slip (s) of the wrap-around part (34).

5. Method according to Claim 4, **characterized in that** the wrap-around part runs around two cone-pulley pairs (39, 32) with an adjustable contact pressure, and **in that** the contact pressure is adjusted as a function of the wear state of the wrap-around part (34).

6. Method according to one of the preceding claims, **characterized in that** the slip (s) is defined as follows:

$$S = 1 - (ig/ji),$$

with s denoting the slip, ig denoting a geometric transmission ratio, and ji denoting the transmission rotational speed ratio.

7. Method according to one of the preceding claims, **characterized in that** the geometric transmission ratio is assumed to be a constant value (c).

8. Method according to one of the preceding claims, **characterized in that** the geometric transmission ratio (ji) is set to the maximum value of the geometric transmission ratio (jimax) if the state "maximum transmission ratio" is detected.

9. Method according to one of the preceding claims, **characterized in that** the geometric transmission ratio (ji) is set to the minimum value of the geometric transmission ratio (jimin) if the state "minimum transmission ratio" is detected.

10. Method according to one of the preceding claims, **characterized in that** the slip detection takes place substantially only in the state "maximum transmission ratio".

11. Method according to one of the preceding claims, **characterized in that** the slip detection takes place substantially only in the state "minimum transmission ratio".

12. Method according to one of the preceding claims, **characterized in that** a detection of slip (ds) is determined as follows:

$$ds(n) = ([ji(n+1) - ji(n)] - K)/N,$$

with ds denoting the change in slip, n denoting an index or a computing grid, ji denoting the transmission rotational speed ratio, K denoting a compensation term and N denoting a normalization term.

13. Method according to Claim 12, **characterized in that** the compensation term (K) is provided for the compensation of relatively slow changes of the transmission rotational speed ratio (ji).

14. Method according to one of Claims 12 or 13, **characterized in that** the compensation term (K) is determined by forming a median value.

15. Method according to one of Claims 12 or 13, **characterized in that** the compensation term (K) is determined by forming a mean value.

16. Method according to one of Claims 12 or 13, **characterized in that** the compensation term (K) is determined as follows:

$$K = [ji(n + 4) - ji(n - 4)]/8,$$

with K denoting the compensation term, ji denoting the transmission rotational speed ratio and n denoting an index or a computing grid.

17. Method according to Claim 12, **characterized in that** the normalization term (N) is provided for adapting the change in slip (ds) to different rotational speed ranges.

18. Method according to Claim 12 or 17, **characterized in that** the normalization term (N) is determined as follows:

$$N = [ji(n)]^3,$$

with N denoting the normalization term, ji denoting the transmission rotational speed ratio and n denoting an index or a computing grid.

**Claims for the following Contracting State(s): DE**

1. Method for detecting slip (s) of a wrap-around part (34) of a wrap-around transmission (10), in particular of a CVT transmission, which has a transmission ratio (ji), **characterized in that** slip of the wrap-around part (34) is detected by assessing the change in the transmission rotational speed ratio (ji), with the assessment of the transmission rotational speed ratio (ji) comprising the distinction between relatively slow changes in the transmission rotational speed ratio (ji) and relatively fast changes in the transmission rotational speed ratio (ji), and **in that** the wear state of the wrap-around part (34) is determined as a function of the detected slip (s) of the wrap-around part (34).

2. Method according to Claim 1, **characterized in that**, in the event of slip (s) being detected, countermeasures are initiated.

3. Method according to Claim 2, **characterized in that** the wrap-around part runs around two cone-pulley pairs (30, 32) with an adjustable contact pressure, and **in that** the countermeasures comprise an increase in the contact pressure.

4. Method according to Claim 1, **characterized in that** the wrap-around part runs around two cone-pulley pairs (39, 32) with an adjustable contact pressure, and **in that** the contact pressure is adjusted as a function of the wear state of the wrap-around part (34).

5. Method according to one of the preceding claims, **characterized in that** the slip (s) is defined as follows:

$$S = 1 - (ig/ji),$$

with s denoting the slip, ig denoting a geometric transmission ratio, and ji denoting the transmission rotational speed ratio.

6. Method according to one of the preceding claims, **characterized in that** the geometric transmission ratio is assumed to be a constant value (c).

7. Method according to one of the preceding claims, **characterized in that** the geometric transmission ratio (ji) is set to the maximum value of the geometric transmission ratio (jimax) if the state "maximum transmission ratio" is detected.

8. Method according to one of the preceding claims, **characterized in that** the geometric transmission ratio (ji) is set to the minimum value of the geometric transmission ratio (jimin) if the state "minimum transmission ratio" is detected.

9. Method according to one of the preceding claims, **characterized in that** the slip detection takes place substantially only in the state "maximum transmission ratio".

10. Method according to one of the preceding claims, **characterized in that** the slip detection takes place substantially only in the state "minimum transmission ratio".

11. Method according to one of the preceding claims, **characterized in that** a detection of slip (ds) is determined as follows:

$$ds(n) = ([ji(n+1) - ji(n)] - K)/N,$$

with ds denoting the change in slip, n denoting an index or a computing grid, ji denoting the transmission rotational speed ratio, K denoting a compensation term and N denoting a normalization term.

12. Method according to Claim 11, **characterized in that** the compensation term (K) is provided for the compensation of relatively slow changes of the transmission rotational speed ratio (ji).

13. Method according to one of Claims 11 or 12, **characterized in that** the compensation term (K) is determined by forming a median value.

14. Method according to one of Claims 11 or 12, **characterized in that** the compensation term (K) is determined by forming a mean value.

15. Method according to one of Claims 11 or 12, **characterized in that** the compensation term (K) is determined as follows:

$$K = [ji(n + 4) - ji(n - 4)]/8,$$

with K denoting the compensation term, ji denoting the transmission rotational speed ratio and n denoting an index or a computing grid.

16. Method according to Claim 11, **characterized in that** the normalization term (N) is provided for adapting the change in slip (ds) to different rotational speed ranges.

**17.** Method according to Claim 11 or 16, **characterized in that** the normalization term (N) is determined as follows:

$$N = [ji(n)]^3,$$

with N denoting the normalization term, ji denoting the transmission rotational speed ratio and n denoting an index or a computing grid.

Fig.1

$$ji = \frac{npm}{nse}$$

Fig.2

Fig.3

Fig.4

Fig.5

Fig.6

## EP 1 402 205 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6099424 A
- DE 10028459 A1